Europäisches Patentamt

European Patent Office

Office européen des brevets

(19)

(11) Publication number: **0 103 292**
**A2**

(12) **EUROPEAN PATENT APPLICATION**

(21) Application number: **83108963.6**

(22) Date of filing: **10.09.83**

(51) Int. Cl.³: **A 47 B 83/00**

(30) Priority: **15.09.82 IT 1812282**

(43) Date of publication of application: **21.03.84**
**Bulletin 84/12**

(84) Designated Contracting States: **AT CH DE FR GB LI SE**

(71) Applicant: **SCHIROLLI S.p.A., S. S. Cremonese 24,**
**I-46100 Mantova (IT)**

(72) Inventor: **Mastruzzi, Claudio, Via V. da Feltre 29,**
**IT-46100 Mantova (IT)**
Inventor: **Mastruzzi, Piero, Via Pascoli 11,**
**IT-46100 Mantova (IT)**

(74) Representative: **Modiano, Guido et al, MODIANO, JOSIF,**
**PISANTY & STAUB Modiano & Associati Via**
**Meravigli, 16, I-20123 Milan (IT)**

(54) **Modular supporting device for items of furniture such as shelves, seats, and various components.**

(57) The involved technical field is that of furnishing, and the invention relates to a supporting device.

The technical problem is that of providing a device which can afford the highest degree of assembling freedom, and the solution resides in a modular composable structure comprising rectilinear elements (1, 4, 8, 10, 12, etc.) which may be detachably assembled to differently configured connection elements (3, 5, 9, 11, etc.), there being provided floor resting disks (2, 7, 19, 22, 27) at the ends of upright rectilinear elements, and brackets attachable to said structure for supporting items of furniture.

EP 0 103 292 A2

"MODULAR SUPPORTING DEVICE FOR ITEMS OF FURNITURE SUCH
AS SHELVES, SEATS, AND VARIOUS COMPONENTS"

This invention relates to a modular supporting device for items of furniture, such as shelves, seats, and various components.

Well known is the wide acceptance gained, particularly in the field of office furnishing, by work shelves formed by a set of standards interconnected by cross-pieces to form an assembly unit to which various accessories, such as chests of drawers, etc., may be connected.

However, such prior supports have, even in their most advanced forms, the disadvantageous characteristic of affording a limited assembling flexibility, thereby the solutions to be obtained by assembling the various elements are not always such as to fully meet the users' requirements.

Thus, the task of this invention is to provide a supporting device which can afford the highest degree of freedom of assembly both in the horizontal and vertical planes.

Within that task it is an object of the invention to provide a device which has high aesthetic characteristics and stands out by an appreciable formal unitary character of the various components.

It is a further object of the invention to provide a device providing readily changeable assembly features to meet any later changes in application requirements.

According to one aspect of the invention, the above task and objects are achieved by a modular supporting device for items of furniture such as shelves, seats and various components, characterized in that it comprises a composable structure including rectilinear elements which may be detachably assembled to connection elements differently configured to enable a range of different lays for said rectilinear elements, there being provided floor resting plates adapted for assembling to the ends of upright rectilinear elements, and brackets removably attachable to said structure for supporting items of furniture.

Further features and advantages will be more readily apparent from the following description of a preferred, though not exclusive, embodiment of the invention, as illustrated by way of example and not of limitation in the accompanying drawings, where:

Figure 1 is a perspective view of one possible configuration of the device also showing some items of furniture for reference purposes;

Figure 2 is a detail view of the joint between two elements;

Figure 3 is an enlarged scale sectional view taken in the plane III-III of Figure 2;

Figure 4 is a front view of a bracket for supporting items of furniture, shown secured to one element of the support shown in section;

Figure 5 is a front view of a bracket, with the arm ends at a lower height than in Figure 4; and

Figure 6 is a fragmentary plan view of the bracket of Figure 5.

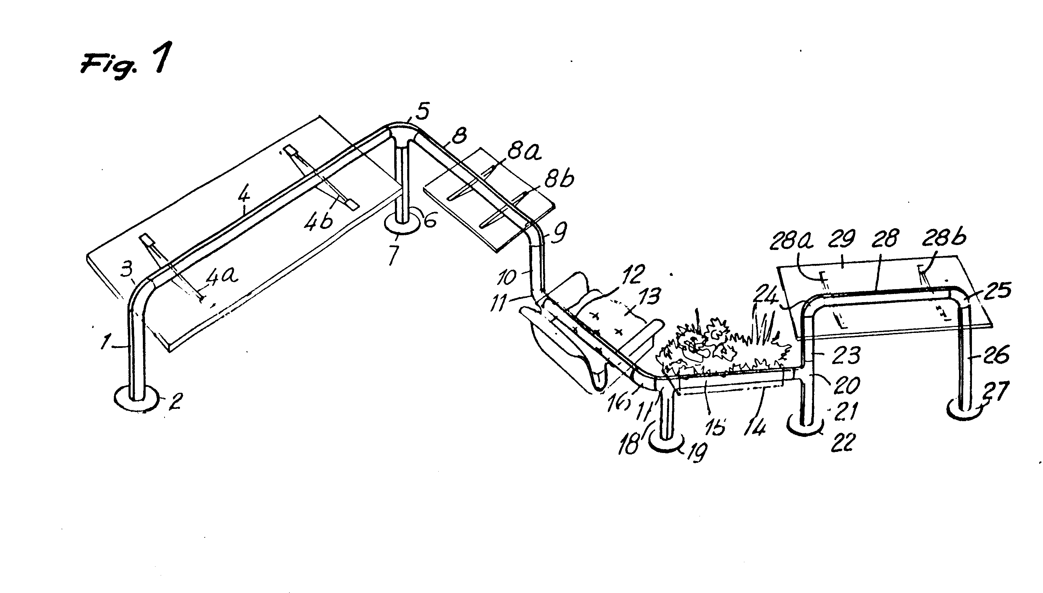

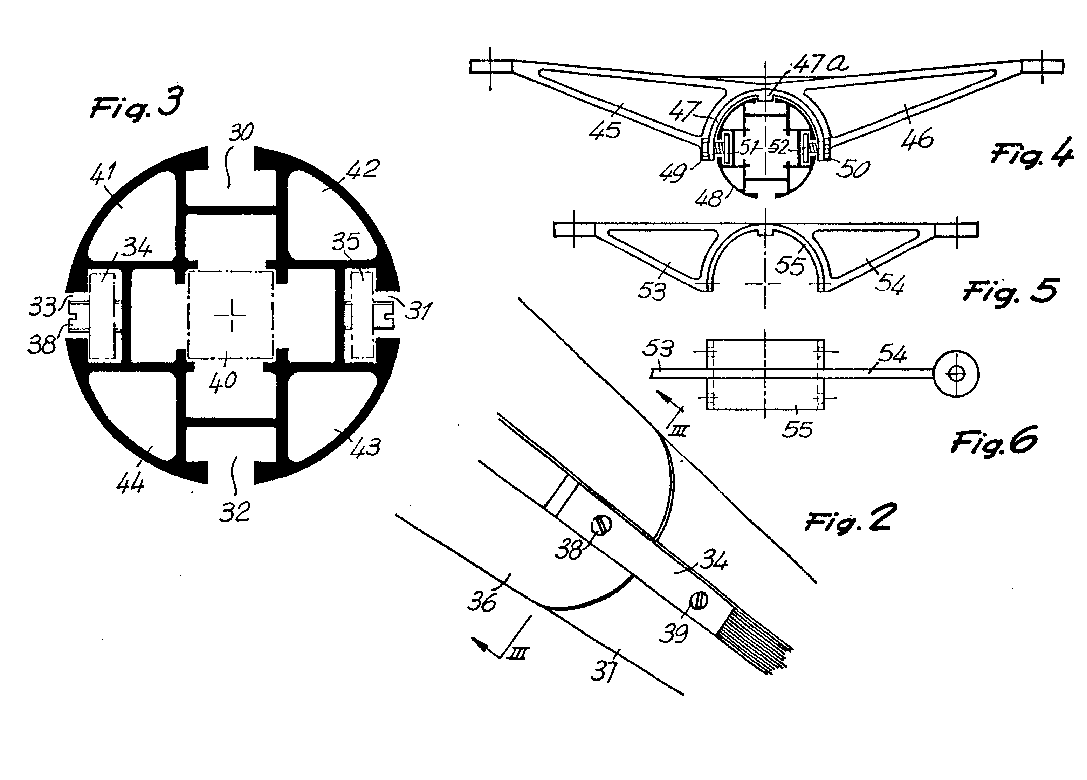

With reference to the cited Figure 1, indicated at 1 is an upright rectilinear element, to the lower end whereof the floor resting disk 2 is assembled, while provided at the upper end is the connection element 3, comprising an arc of a circle with a 90° central angle, to which the element 4 is connected which is terminated at the connection 5. From said connection element 5, there extend the upright rectilinear element 6 with resting disk 7, and the horizontal element 8, orthogonal to 4; attached to said element 4 are brackets 4a and 4b of the type shown in Figure 4 to provide support for a desk top at the standard height of 75 cm, while attached to the element 8 are the brackets 8a and 8b of the type shown in Figure 5 for supporting a typewriting table top at the standard height of 69 cm.

Secured to the end of the element 8 is the connection element 9, identical to 3, to which there is connected a short upright element 10 carrying, at one end thereof,and via the connection element 11 also identical to 3, the horizontal element 12 at a suitable height to hold the seat 13, which will be affixed thereto by means of brackets of the types shown in either Figure 4 or Figure 5.

Supported by the horizontal element 15,through conventional brackets,at the same height as the seat 13,is the flower shelf 14,said horizontal element 15 being assembled with one end to the element 12 by means of the connection elements 16, extending along an arc with central angle of 45°, and 17 of T-like configuration which afford the obtainment of the buttress 18 with disk 19 intended to rest on the floor surface, while, at the other end, it is provided with the T-like connection element 20, inserted between the two upright elements 21, with resting disk 22 and 23.

The connections 24 and 25 of the same type as 3, the former being attached to the element 23 and the latter to the upright element 26 with resting disk 27, support the horizontal element 28 which, through the brackets 28a and 28b, supports the shelf 29.

The cross-sectional configuration of all the elements just described is substantially as shown in Figure 3; the presence of four grooves 30,31,32,33 may be noted therein which run longitudinally, at least for the rectilinear elements, through the entire length of the elements, formed by a wide portion and a narrow slot connected to the exterior. In the wide portion there may be inserted small plates of parallelepipedal shape, such as 34 and 35, which function to detachably fasten two contiguous elements in accordance with a procedure to be described with reference to just the plate 34 between the elements 36 and 37 shown in Figure 2: thus, said plate 34 is inserted in part into the groove of the element 36 and in part in that of the element 37, and then the screws 38 and 39 are operated which abut against the groove bottom to urge the plate against the wall on the slot sides, thereby the elements are locked by frictional engagement.

The number of the grooves, as well as that of the plates, may, of course, vary from that described.

An axial pin 40 may be provided between two adjoining elements for reference prior to locking.

Finally, the longitudinal channels 41,42,43,44 may accommodate conductors, such as electric cables or different piping.

Figure 4 shows a bracket for supporting items of furniture: it is formed by the two arms 45 and 46 extending from the shell 47 superimposable on the upper portion of an element 48 with reference formed by the serration 47a in one groove of said element, and detachably securable thereto by means of screws such as 49 and 50 associated with throughgoing holes in the shell 47 and with threaded holes in small plates 51 and 52 inserted into element grooves.

Also shown in Figures 5 and 6 is a bracket wherein the arms 53 and 54 do not extend above the shell 55.

It will be apparent from the foregoing how the device may take a wide range of configurations: in fact, the structure formed by the rectilinear elements with the connection elements may be moved along multiple paths both in the horizontal and vertical planes, thus lending itself for supporting any types of furniture items and achieving the most suitable assembled configurations for any interior style.

Also to be underlined is the characteristic consisting of the faculty of changing the assembly as the user's requirements change, and the formal continuity of the line which denotes a qualified aesthetic study aimed at providing substantial uniformity of the various components.

The invention just described is susceptible of numerous modifications and variations, without departing from the scope of the inventive concept; thus, as an example, there may be provided additional connection elements to those described, and different may also be the assembling arrangement thereof to the rectilinear elements, e.g. with the small plate formed integral with the connection elements.

In practicing the invention, all of the details may be replaced with other technically equivalent elements; moreover, the materials used, as well as the shapes and dimensions, may be any selected ones to meet individual requirements.

## CLAIMS

1. A supporting device for items of furniture such as shelves, seats, and various components, characterized in that it comprises a composable structure including rectilinear elements of any size which may be detachably assembled to connection elements differently configured to enable a range of different lays for said rectilinear elements, there being provided floor resting plates adapted for assembling to the ends of upright rectilinear elements, and brackets removably attachable to said structure for supporting items of furniture.

2. An assembly of pieces of furniture, characterized in that at least part of the pieces of furniture are supported on a supporting device according to Claim 1.

3. A device according to Claim 1, characterized by the provision of a connection element (3) shaped to follow an arc of a circle with a 90° central angle.

4. A device according to Claim 1, characterized by the provision of a connection element (16) shaped to follow an arc of a circle with a 45° central angle.

5. A device according to Claim 1, characterized by the provision of a T-like connection element (17).

6. A device according to Claim 1, characterized by the provision of a connection element (5) configured to interconnect rectilinear elements extending along three orthogonal spatial directions.

7. A device according to one or more of the preceding claims, characterized in that each element comprises a plurality of grooves (30,31,32,33) extending from one end to the other in a coincident direction with the axis direction at least for said rectilinear elements, connected to the exterior through a narrow slot and being adapted to accommodate small plates (34,35) provided with screws which are located at the slot and intended to abut against the bottom of said grooves (30,31,32,33) so as to force the small plates against the opposed face in such a way as to frictionally lock said elements.

8. A device according to one or more of the preceding claims, characterized in that the grooves (30,31,32,33) are four in number, equally spaced apart, and arranged such that one of them is located at the generatrix of the horizontal rectilinear elements which extends at the highest level.

9. A device according to one or more of the preceding claims, characterized in that the small plates (34,35) are formed integral with the connection elements (36,37).

10. A device according to Claim 1, characterized in that said elements comprise on their interiors at least one conductor containing channel (41,42,43,44).

11. A device according to one or more of the preceding claims, characterized by the provision of a reference pin (40) insertable into suitable facing grooves formed on the interior of the individual elements.

12. A device according to one or more of the preceding claims, characterized in that the cross-section of each element is a circular one.

13. A device according to one or more of the preceding claims, characterized in that each bracket for supporting the items of furniture comprises a pair of arms (45,46) extending on opposite sides from a superimposable shell (47) on the upper portion of the structure elements (48), provided with a reference serration (47a) for one of the grooves provided on said elements and securable thereto by means of screws (49,50) engageable in holes formed in small plates (51,52) inserted in said grooves.

14. A device according to Claims 1 and 13, characterized by the provision of brackets  with the ends of the arms (53,54) extending from the shell (55) located at different heights with respect thereto.

*Fig. 1*

01033292

1/2

0103292

Fig. 4

Fig. 5

Fig. 6

Fig. 2

Fig. 3